# EUROPÄISCHE PATENTSCHRIFT

(11) **EP 2 487 064 B1**
(45) Veröffentlichungstag und Bekanntmachung des Hinweises auf die Patenterteilung: **17.09.2014**
(21) Anmeldenummer: 11191390.1
(22) Anmeldetag: 30.11.2011
(51) Int. Cl.: B60N 2/42, B60N 2/427

(54) **Fahrzeugsitzaufnahme**
Vehicle seat holder
Réception de siège de véhicule

(30) Priorität: 04.03.2011 EP 11157056; 07.11.2011 EP 11188116
(43) Veröffentlichungstag der Anmeldung: 15.08.2012
(73) Patentinhaber: Metalsa Automotive GmbH, 51702 Bergneustadt (DE)
(72) Erfinder: Hellweg, Hans-Bernd, Dr., 53819 Neunkirchen-Seelscheid (DE); Kern, Alexander, 51597 Morsbach (DE)
(74) Vertreter: Kalkoff & Partner

(56) Entgegenhaltungen:
- WO-A1-2005/054004
- US-A- 2 823 730
- US-A- 3 452 834
- US-A- 3 578 376
- US-A- 6 142 564
- US-A1- 2007 273 186

## Beschreibung

Die Erfindung betrifft eine Fahrzeugsitzaufnahme, mit
- einem mit einem Fahrzeugboden verbindbaren Grundkörper und
- einem mit einem Fahrzeugsitz, insbesondere einem Schienenpaar eines Fahrzeugsitzes, bevorzugt einer Bodenschiene eines Fahrzeugsitzes verbindbaren Aufnahmekörper,
wobei der Aufnahmekörper derart mit dem Grundkörper verbunden ist, dass der Aufnahmekörper im Crashfall relativ gegenüber dem Grundkörper aus einer Normallage in Richtung auf eine Crashlage verlagerbar ist.

Kraftfahrzeugsitze, insbesondere PKW-Fahrzeugsitze werden üblicherweise über standardmäßig an den Fahrzeugsitzen angeordnete Sitzschienenpaare mit dem Fahrzeugboden verbunden. Hierzu weisen die Fahrzeugböden in der Regel bereits entsprechende Befestigungsöffnungen, bspw. mit einem Gewinde versehene Bohrungen auf, die ein Anschrauben der Unterschiene der Schienenpaare der Fahrzeugsitze mittels geeigneter Verbindungsschrauben am Fahrzeugboden ermöglichen. Die Bodenschiene wird durch diese Verbindung ortsfest an dem Fahrzeug angeordnet. Eine Längsverstellung des Fahrzeugsitzes ist jedoch durch eine Verschiebung einer Sitzschiene gegenüber der Bodenschiene möglich, wobei im Betrieb des Fahrzeuges eine eingestellte Sitzposition gegenüber dem Fahrzeugboden festgelegt ist, so dass der Fahrzeugsitz weitestgehend starr über die bestehenden Verschraubungen mit dem Fahrzeugboden verbunden ist.

Im Falle von Verkehrsunfällen beklagen sich die Fahrzeuginsassen häufig über ein sogenanntes Schleudertrauma, wobei dieses selbst dann auftritt, wenn der Unfall mit einer vergleichsweise geringen Geschwindigkeit erfolgt. Als Schleudertrauma werden dabei Krankheitssymptome angesehen, die aus einer Beschleunigung und Überstreckung des Kopfes resultieren, welche üblicherweise bei einem Heckaufprall auftreten.

Die Verletzungen resultieren dabei aus dem auch als Whiplash-Effekt bezeichneten Bewegungsablauf des Kopfes beim Unfall, wobei in Folge einer rückwärts gerichteten Bewegung eines Fahrzeuginsassen nach einem Heckaufprall zwar der Oberkörper durch die starre Rückenlehne abgefangen wird, der Kopf jedoch oberhalb des Nackens plötzlich abknickt, so dass es zu dem zuvor beschriebenen Schleudertrauma kommt.

Zur Verminderung des Whiplash- oder Peitschenschlag-Effekts existieren bereits eine Vielzahl von Lösungsansätzen (Z.B. WO-A-2005/054004). Neben der Verbesserung der Kopfstützen werden auch Systeme entwickelt, die durch geeignete Ausgestaltung der Fahrzeugsitze die Verlagerbarkeit der Rückenlehne im Crashfall ermöglichen. Die Verlagerbarkeit der Rückenlehne soll dabei dazu dienen, über die rückwärts gerichtete Bewegung der Rückenlehne den Körper aufzufangen und die crashinduzierte Bewegung sanft abzubremsen, um so die aus einem abrupten Abbremsen der Rückenbewegung resultierende Kopfbeschleunigung zu reduzieren. Die bekannten Systeme setzen jedoch eine umfangreiche und kostenintensive Ausgestaltung der Fahrzeugsitze voraus, um eine im Crashfall bewegliche Anordnung, bspw. der Rückenlehne zu ermöglichen.

Der Erfindung liegt die Aufgabe zugrunde, eine Fahrzeugsitzaufnahme zur Anordnung eines Fahrzeugsitzes an einem Fahrzeugboden bereitzustellen, welche im Crashfall die Verlagerung des Fahrzeugsitzes ermöglicht.

Die Erfindung löst die Aufgabe durch eine Fahrzeugsitzaufnahme mit den Merkmalen des Anspruchs 1. Vorteilhafte Weiterbildungen der Erfindung sind in den abhängigen Ansprüchen angegeben.

Kennzeichnend für die erfindungsgemäße Fahrzeugsitzaufnahme ist, dass der Aufnahmekörper im Normalbetrieb durch ein verlagerbares und in der Normallage des Aufnahmekörpers mit diesem und dem Grundkörper in Eingriff befindliches Sperrelement lagestabil am Grundkörper angeordnet ist, wobei das Sperrelement jedoch im Crashfall mittels einer elektromagnetisch und/oder pyrotechnisch wirkenden Betätigungseinheit mit dem Grundkörper und/oder dem Aufnahmekörper außer Eingriff bringbar ist.

Ein wesentliches Merkmal der erfindungsgemäßen Fahrzeugsitzaufnahme besteht darin, dass deren mit dem Fahrzeugsitz verbindbarer Aufnahmekörper im Normalbetrieb eines Kraftfahrzeuges stabil in seiner Normallage arretiert ist, so dass eine zuverlässige Anbindung des Fahrzeugsitzes am Fahrzeugboden gegeben ist. Im Crashfall besteht jedoch die Möglichkeit, die lagestabile Verbindung zwischen dem Aufnahmekörper und dem am Fahrzeugboden ortsfest anordbaren Grundkörper aufzulösen, so dass der Aufnahmekörper relativ gegenüber dem Grundkörper verlagerbar ist, was wiederum eine Verlagerung des Fahrzeugsitzes in Verstellrichtung des Aufnahmekörpers gegenüber dem Grundkörper ermöglicht.

Die lagestabile Verbindung im Normalbetrieb wird dabei durch ein mit dem Grundkörper und dem Aufnahmekörper in Eingriff befindliches Sperrelement erzeugt. Um eine Verstellung des Aufnahmekörpers zu ermöglichen, ist es daher erforderlich, das Sperrelement derart gegenüber dem Aufnahmekörper oder dem Grundkörper zu verschieben, dass das Sperrelement mit dem Grundkörper und/oder dem Aufnahmekörper außer Eingriff gelangt. Hierzu ist erfindungsgemäß eine elektromagnetisch und/oder pyrotechnisch wirkende Betätigungseinheit vorgesehen, welche nach ihrer Aktivierung eine sofortige Verlagerung des Sperrelements bewirkt.

Die erfindungsgemäße Fahrzeugsitzaufnahme zeichnet sich somit dadurch aus, dass sie im Normalbetrieb eines Kraftfahrzeuges eine lagestabile Anordnung eines unter Verwendung der Fahrzeugsitzaufnahme angeordneten Fahrzeugsitzes gewährleistet. Im Crashfall besteht darüber hinaus die Möglichkeit, die lagestabile Verbindung zwischen dem Grundkörper und dem Aufnahmekörper mittels der Betätigungseinheit schlagartig aufzulösen, so dass der Aufnahmekörper gegenüber dem Grundkörper und somit auch der Fahrzeugsitz gegenüber dem Fahrzeugboden verstellbar ist.

Der Grad der Verlagerung des Fahrzeugsitzes sowie die Bewegungsrichtung ist dabei unter anderem von der Positionierung der Fahrzeugsitzaufnahme gegenüber dem Fahrzeugsitz sowie der Ausgestaltung der Verbindung von Grundkörper und Aufnahmekörper abhängig. Im Falle der ausschließlichen Verwendung der erfindungsgemäßen Fahrzeugsitzaufnahmen zur Anordnung eines Fahrzeugsitzes in einem Fahrzeug kann über eine crashspezifische Auswahl der zu aktivierenden Fahrzeugsitzaufnahmen die Bewegungsmöglichkeit des Fahrzeugsitzes nach der Aktivierung frei festgelegt werden. So können die Fahrzeugsitzaufnahmen sowohl derart angesteuert werden, dass ein seitliches Verkippen des Fahrzeugsitzes möglich ist, es kann jedoch auch eine Ansteuerung der Fahrzeugsitzaufnahme erfolgen, die ein - bezogen auf die Einbaulage - Verkippen des Fahrzeugsitzes um eine Fahrzeugquerachse ermöglicht.

Eine bevorzugte Verwendung der Fahrzeugsitzaufnahme zur Befestigung der - bezogen auf die Einbaulage - vorderen Sitzenden des Fahrzeugsitzes ermöglicht im Crashfall ein Anheben des vorderen Bereichs der Fahrzeugsitzfläche, wodurch der gesamte Sitz um einen hinteren Anlenkpunkt mit dem Fahrzeugboden verschwenkt wird. Die hieraus resultierende, crashenergieverzehrende Bewegung der Rückenlehne des Fahrzeugsitzes bewirkt eine Dämpfung der im Falle eines Heckaufpralls auftretenden Bewegungen der Fahrzeuginsassen, wodurch eine plötzliche Überstreckung des Kopfes aufgrund einer abrupten Abbremsung des Insassenrückens im Falle von starren Rückenlehnen vermindert und somit Verletzungen reduziert werden.

Ein weiterer Vorteil der erfindungsgemäßen Fahrzeugsitzaufnahmen besteht darin, dass durch die energieverzehrende Bewegung die im Crashfall auf die Fahrzeugsitzschienen wirkenden Belastungen reduziert werden. Hierdurch wird einem Brechen der Schienen in wirkungsvoller Weise vorgebeugt, wozu diese bei einer üblicherweise starren Anbindung an einem Fahrzeugboden im Crashfall neigen.

Die Lagesicherung des Aufnahmekörpers an dem Grundkörper in dessen Normallage erfolgt nach einer vorteilhaften Weiterbildung der Erfindung dadurch, dass der Aufnahmekörper in der Normallage formschlüssig mit dem Sperrelement verbunden ist. Die formschlüssig wirkende Verbindung, wobei der Formschluss in Bewegungsrichtung des Aufnahmekörpers im Crashfall vorliegt, sichert in besonders vorteilhafter Weise die Lage des Aufnahmekörpers im Normalbetrieb und gewährleistet darüber hinaus dadurch, dass durch eine Auflösung der formschlüssigen Verbindung eine Freigabe des Aufnahmekörpers erfolgt, im Crashfall eine sichere Verlagerung des mit dem Aufnahmekörper verbundenen Fahrzeugsitzes. Zur Aufhebung der Verbindung ist es dabei ausreichend, wenn das Sperrelement allein mit dem Aufnahmekörper außer Eingriff gelangt, d. h. der mit dem Aufnahmekörper bestehende Formschluss aufgehoben wird.

Die erfindungsgemäße Fahrzeugsitzaufnahme stellt insgesamt eine besonders einfache Möglichkeit dar, im Falle eines Unfalls - insbesondere Heckaufpralls oder Seitenaufpralls - durch die dann gegebene Verlagerbarkeit des mit den Fahrzeugsitzaufnahmen verbundenen Fahrzeugsitzes, drohende Verletzungen der Fahrzeuginsassen zu reduzieren. Die Fahrzeugsitzaufnahme lässt sich dabei in besonders einfacher Weise mit dem Fahrzeugboden verbinden und zeichnet sich dabei dadurch aus, dass eine Anpassung der Fahrzeugsitze zu deren Verbindung mit den Fahrzeugsitzaufnahmen hierfür nicht erforderlich ist. Die Fahrzeugsitze können in mittlerweile nahezu standardisierter Form über die üblicherweise an den Bodenschienen vorgesehenen Befestigungsöffnungen mit dem Aufnahmekörper verbunden, vorzugsweise verschraubt werden. Im Normalbetrieb weist der unter Verwendung einer erfindungsgemäßen Fahrzeugsitzaufnahme angeordnete Fahrzeugsitz dabei keinerlei gegenüber in herkömmlicher Weise angeordneten Fahrzeugsitzen abweichende Eigenschaften auf. Im Crashfall wird jedoch durch die Fahrzeugsitzaufnahme eine Fahrzeugsitzbewegung ermöglicht, durch welche Verletzungen der Fahrzeuginsassen verhindert oder zumindest reduziert werden.

In ergänzender Weise können dabei dadurch Verletzungen reduziert werden, dass nach einer vorteilhaften Weiterbildung der Erfindung im Bewegungsbereich des Aufnahmekörpers aus der Normallage in Richtung auf dessen Crashlage ein elastisch und/oder plastisch verformbares Absorptionselement angeordnet ist. Ein Absorptionselement, das auch nur in Teilbereichen des Bewegungsbereichs des Aufnahmekörpers ausgehend aus der Normallage in die Crashlage angeordnet sein kann oder aber auch über den gesamten Bewegungsbereich mit dem Aufnahmekörper in Eingriff befindlich ist, erlaubt es, über die Ausgestaltung und Auswahl des Absorptionselements in besonders einfacher und komfortabler Weise den zur Verlagerung des Aufnahmekörpers erforderlichen Energieaufwand festzulegen.

Die Ausgestaltung sowie die Anordnung des Absorptionselements ist dabei grundsätzlich frei wählbar. Sowohl elastisch als auch plastisch verformbare Absorptionselemente lassen sich in beliebiger Form besonders einfach und kostengünstig herstellen und ermöglichen einen hohen Energieabbau und weisen darüber hinaus die Eigenschaft auf, dass sie sich gut an den Grundkörper und/oder den Aufnahmekörper anpassen lassen. Im Falle der Verwendung eines plastisch verformbaren Absorptionselements kann erreicht werden, dass nach der Deformation des Absorptionselements keine Rückstellkraft durch das Absorptionselement in Richtung auf die Normallage aufgebracht wird.

Die konkrete Ausgestaltung des Grundkörpers sowie des Aufnahmekörpers der Fahrzeugsitzaufnahme ist grundsätzlich frei wählbar. Nach einer besonders vorteilhaften Ausgestaltung der Erfindung ist jedoch vorgesehen, dass das Sperrelement durch einen Schlittenkörper gebildet ist, der längsverschieblich zwischen einer Sperrlage und einer Freigabelage an einem ein Schienenprofil aufweisenden Grundkörper gelagert ist. Gemäß dieser Ausgestaltung der Erfindung ist vorgesehen, dass das Sperrelement in seiner Sperrlage über einen Formschluss den Aufnahmekörper an dem Grundkörper arretiert. Zur Freigabe des Aufnahmekörpers ist es erforderlich, das als Schlittenkörper ausgebildete Sperrelement an oder in dem ein Schienenprofil aufweisenden Grundkörper so zu verlagern, dass der Schlittenkörper mit dem Aufnahmekörper außer Eingriff gelangt.

Die Ausgestaltung des Grundkörpers mit oder als Schienenprofil mit einem daran verschiebbar angeordneten Schlittenkörper weist den Vorteil auf, dass er eine besonders zuverlässige Verlagerung bei einem gleichzeitig geringen Bauraum erlaubt. Eine schienenförmige Ausgestaltung des Grundkörpers gewährleistet darüber hinaus eine zuverlässige Lagesicherung des Schlittenkörpers gegenüber dem Grundkörper in Verstellrichtung des Aufnahmekörpers, so dass in der Sperrlage des Schlittenkörpers der Aufnahmekörper zuverlässig in der Normallage arretiert ist. Fehlauslösungen können durch diese Ausgestaltung besonders zuverlässig ausgeschlossen werden.

Die Herstellung der formschlüssigen Verbindung zwischen dem Sperrelement und dem Aufnahmekörper in der Normallage kann grundsätzlich in beliebiger Weise erfolgen. Nach einer besonders vorteilhaften Ausgestaltung der Erfindung ist jedoch vorgesehen, dass das Sperrelement, bevorzugt der Schlittenkörper, mindestens eine im Wesentlichen quer zur Verstellrichtung des Aufnahmekörpers aus der Normallage in die Crashlage verlaufende Lasche aufweist, die in der Sperrlage an einer Kontaktfläche des Aufnahmekörpers anliegt.

Gemäß dieser Weiterbildung der Erfindung besteht der Formschluss zwischen einer Lasche des Sperrelements, bevorzugt des Schlittenkörpers sowie einer Kontaktfläche des Aufnahmekörpers, wobei die Anlagefläche besonders vorteilhafterweise im Wesentlichen quer zur Verstellrichtung des Aufnahmekörpers aus der Normallage in die Crashlage verläuft. Durch diese Ausgestaltung der Erfindung kann eine besonders einfache und zuverlässige Lagesicherung des Aufnahmekörpers erreicht werden. Zur Aufhebung der formschlüssigen Verbindung, welche durch die Lasche und die Kontaktfläche hergestellt ist, ist es lediglich erforderlich, das Sperrelement quer zur Verstellrichtung des Aufnahmekörpers zu verschieben, wodurch das Sperrelement mit den Kontaktflächen an dem Aufnahmekörper außer Eingriff gelangt.

Die Ausgestaltung des Aufnahmekörpers kann grundsätzlich in beliebiger Weise, d. h. sowohl einteilig als auch mehrteilig erfolgen. In seiner Gesamtheit ist der Aufnahmekörper mit dem Fahrzeugsitz verbindbar, so dass eine Freigabe des Aufnahmekörpers eine Verlagerung des Fahrzeugsitzes gegenüber dem Grundkörper ermöglicht. Nach einer besonders vorteilhaften Ausgestaltung der Erfindung weist der Aufnahmekörper einen in der Normallage zumindest abschnittsweise innerhalb des Schienenprofils angeordneten Halteschuh auf, der mindestens eine Kontaktfläche zur formschlüssigen Verbindung mit dem Sperrelement sowie einen Stützkörper aufweist, der in der Normallage an einer dem Fahrzeugsitz zugewandten Stützfläche des Grundkörpers anliegt.

Gemäß dieser Ausgestaltung der Erfindung weist der Aufnahmekörper als einen Bestandteil einen Halteschuh auf, welcher einerseits zur Lagesicherung durch das Sperrelement eine mit dem Sperrelement in Eingriff bringbare Kontaktfläche aufweist. Darüber hinaus weist der Halteschuh, welcher unmittelbar mit dem Fahrzeugsitz in Verbindung steht, einen Stützkörper auf, welcher in der Normallage an einer dem Fahrzeugsitz zugewandten Stützfläche des Grundkörpers anliegt. Hierdurch wird eine ergänzende Lagesicherung des Aufnahmekörpers, insbesondere entgegengesetzt der Verstellrichtung des Aufnahmekörpers im Crashfall erzielt. Somit kann besonders zuverlässig gewährleistet werden, dass der Aufnahmekörper in bzw. entgegengesetzt der Verstellrichtung des Aufnahmekörpers im Crashfall lagesicher an dem Grundkörper angeordnet ist.

Nach einer Weiterbildung der Erfindung ist dabei vorgesehen, dass der Halteschuh mit einem sich in Verstellrichtung des Aufnahmekörpers erstreckenden Stiftkörper verbunden ist, wobei der Stiftkörper ein koaxial zu diesem angeordnetes Dämpfungselement aufweist, das einenends an dem Grundkörper und anderenends an einem Anschlagelement anliegt, das im Bereich des dem Halteschuh gegenüberliegenden Endes des Stiftkörpers radial von diesem vorsteht. Gemäß dieser Ausgestaltung der Erfindung weist der Aufnahmekörper neben dem Halteschuh einen mit dem Halteschuh verbundenen Stiftkörper auf, welcher sich entgegen der Verstellrichtung des Aufnahmekörpers aus der Normal- in die Crashlage erstreckt.

Koaxial zum Stiftkörper ist dabei ein Dämpfungselement angeordnet, welches an einer Unterseite des Grundkörpers sowie an einem Anschlagelement anliegt, das an einem dem Halteschuh gegenüberliegenden Ende von dem Stiftkörper vorsteht. Im Crashfall, d. h. im Falle einer Verlagerung des Aufnahmekörpers gegenüber dem Grundkörper erfolgt aufgrund der dann stattfindenden Verlagerung des Stiftkörpers gegenüber dem Grundkörper eine Stauchung des Dämpfungselements zwischen dem Anschlagelement und dem Grundkörper, wodurch ein erhöhter Energieabbau erreicht werden kann. Diese Ausgestaltung der Erfindung lässt sich besonders einfach und kostengünstig realisieren und benötigt darüber hinaus einen nur geringen Bauraum im Kraftfahrzeug.

Die Ausgestaltung des Stiftkörpers ist dabei grundsätzlich frei wählbar. So kann dieser bspw. durch einen mit dem Halteschuh verbundenen Bolzen gebildet sein, dessen dem Halteschuh gegenüberliegendes Ende nach Anordnung des Dämpfungselements zur Bildung eines Anschlagelements aufgeweitet wird. Nach einer besonders vorteilhaften Ausgestaltung der Erfindung ist jedoch vorgesehen, dass der Stiftkörper durch eine Gewindehülse gebildet ist, die einenends zur Befestigung mit dem Fahrzeugsitz und/oder anderenends zur Anordnung einer in die Gewindehülse einschraubbaren Schraube ausgebildet ist.

Diese Ausgestaltung der Erfindung ermöglicht eine besonders einfache Herstellung des Aufnahmekörpers. Die mit dem Halteschuh verbundene, bspw. eingepresste Gewindehülse weist einenends ein Gewinde zur Aufnahme einer Befestigungsschraube für den Fahrzeugsitz und anderenends ein Gewinde zum Einschrauben einer Schraube auf, so dass sich ein Dämpfungselement besonders einfach an der Schraube bzw. der Gewindehülse anordnen lässt. Hierzu ist es lediglich erforderlich, die Schraube nach der Anordnung des Dämpfungselements koaxial zur Gewindehülse in diese einzuschrauben. Das Anschlagelement wird dann durch den Schraubenkopf gebildet, so dass auf eine ergänzende mechanische Nachbearbeitung des Stiftkörpers zur Lagesicherung des Dämpfungselements zwischen dem Grundkörper und dem Anschlagelement verzichtet werden kann. Überdies besteht durch eine derartige Ausgestaltung des Anschlagkörpers die Möglichkeit, diesen entsprechend der unterschiedlichen Rahmenbedingungen in einfacher Weise anzupassen.

Im Falle der Verwendung des gemäß einer vorteilhaften Weiterbildung der Erfindung vorgesehenen Schlittenkörpers ist nach einer weiteren Ausgestaltung der Erfindung vorgesehen, dass dieser in Richtung auf seine Sperrlage vorgespannt ist, insbesondere durch ein einenends an dem Schlittenkörper und anderenends an dem Grundkörper anliegendes Federelement, bevorzugt eine Schraubendruckfeder. Durch diese Ausgestaltung der Erfindung wird in besonders zuverlässiger Weise die Position des Sperrelements gegenüber dem Aufnahmekörper und dem Grundkörper in seiner Sperrlage gesichert. Darüber hinaus werden durch diese Ausgestaltung der Erfindung unter Umständen auftretende Klappergeräusche, welche aus Relativbewegungen des Schlittenkörpers gegenüber dem Grundkörper oder weiteren Anbauteilen resultieren könnten, besonders wirksam vermieden.

Zur Verlagerung des Sperrelements ist nach einer besonders vorteilhaften Ausgestaltung der Erfindung der pyrotechnische Aktuator derart an dem Grundkörper angeordnet, vorzugsweise mit dessen Längsachse parallel zur Längsachse des Schienenprofils des Grundkörpers, dass dessen Aktivierung eine Verlagerung des Schlittenkörpers aus der Sperrlage in Richtung auf die Freigabelage bewirkt. Durch diese Ausgestaltung der Erfindung lässt sich die Fahrzeugsitzaufnahme besonders klein und kompakt aufbauen. Der pyrotechnische Aktuator erstreckt sich dabei im Wesentlichen parallel zum Schienenprofil des Grundkörpers, so dass insbesondere die Bauhöhe der Fahrzeugsitzaufnahme besonders gering ist. Hierdurch ist es möglich, den Fahrzeugsitz in einer besonders tiefen Position am Fahrzeug anzuordnen.

Die Anordnung des pyrotechnischen Aktuators ist dabei derart, dass dessen Aktivierung vorzugsweise unmittelbar eine Verlagerung des Sperrelements bewirkt, wobei besonders vorteilhafterweise hierzu der pyrotechnische Aktuator mit seiner Gasaustrittsöffnung im Bereich der Seitenfläche des Schlittenkörpers angeordnet ist, die dem Federelement gegenüberliegend verläuft. Insofern wirkt der Gasausstoß direkt auf den Schlittenkörper und verlagert diesen entgegen der Federvorspannung bis das Sperrelement, vorzugsweise der Schlittenkörper mit dem Aufnahmekörper, außer Eingriff gelangt, so dass dieser dann gegenüber dem Grundkörper verlagerbar ist. Auf zusätzlich mechanische oder andersartige Kopplungsmittel zur Übertragung der Antriebsenergie des pyrotechnischen Aktuators auf das Sperrelement, insbesondere den Schlittenkörper kann gemäß dieser Ausgestaltung der Erfindung verzichtet werden.

Ausführungsbeispiele der Erfindung werden nachstehend mit Bezug auf die Zeichnungen erläutert. In den Zeichnungen zeigen:
- Fig. 1: eine perspektivische Darstellung einer ersten Ausführungsform einer Fahrzeugsitzaufnahme in einer Normallage;
- Fig. 2: eine Draufsicht auf die Fahrzeugsitzaufnahme von Fig. 1;
- Fig. 3: in einer Schnittdarstellung eine Seitenansicht der Fahrzeugsitzaufnahme von Fig. 1;
- Fig. 4: eine Explosionsdarstellung einer zweiten Ausführungsform einer Fahrzeugsitzaufnahme und
- Fig. 5: eine Seitenansicht der Fahrzeugsitzaufnahme von Fig. 4 in einer Einbaulage.

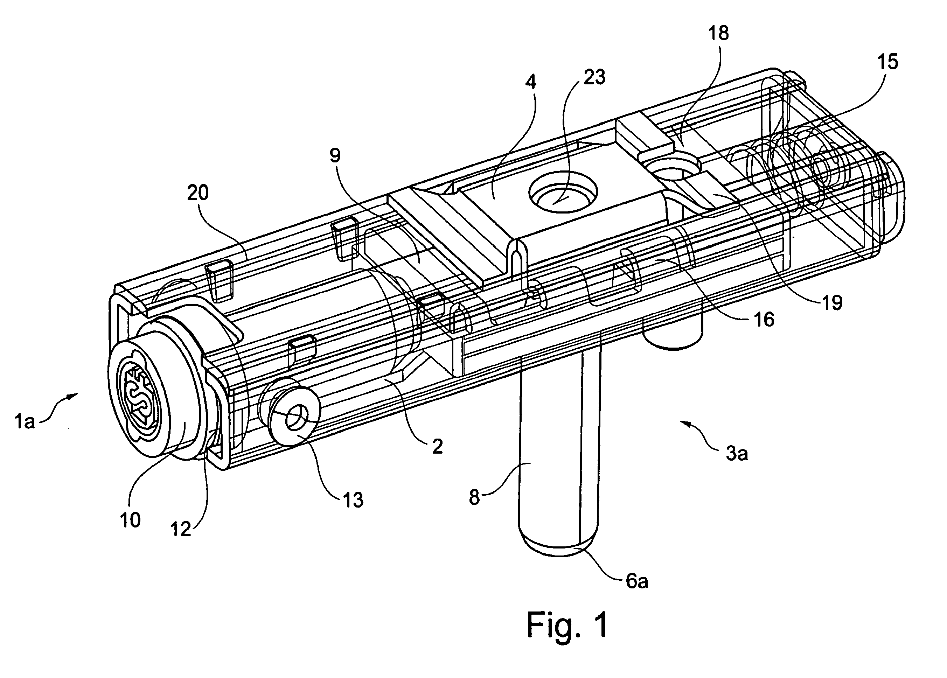

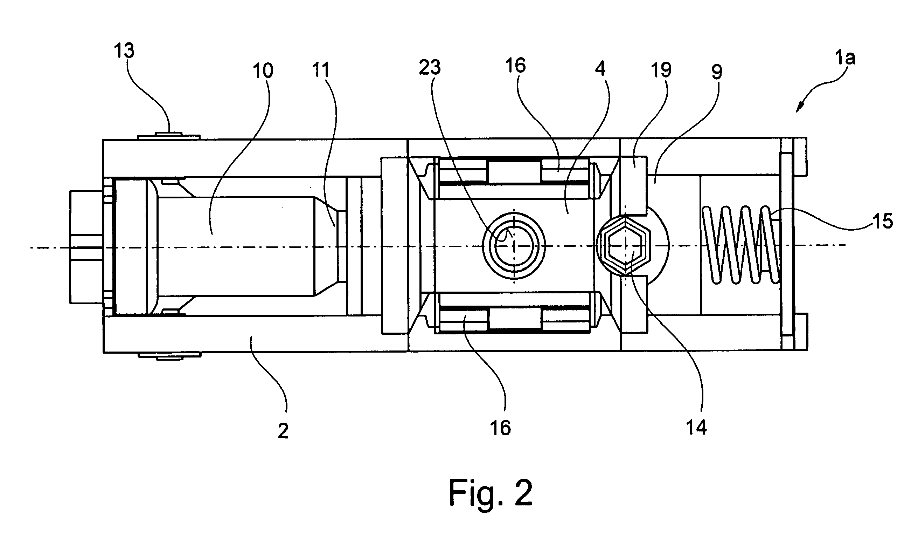

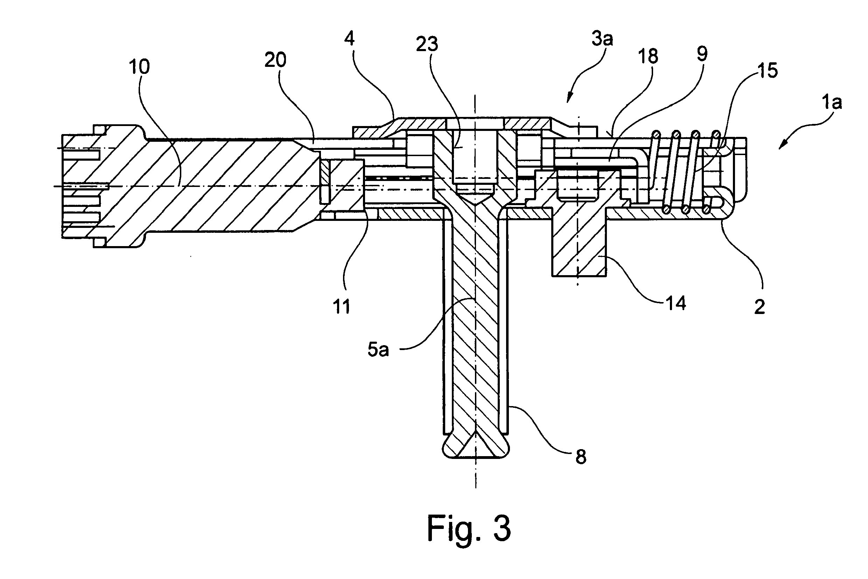

In Fig. 1 ist eine perspektivische Darstellung einer ersten Ausführungsform einer Fahrzeugsitzaufnahme 1a dargestellt. Zur Verbindung der Fahrzeugsitzaufnahme 1a mit einem hier nicht dargestellten Fahrzeugsitz weist diese einen Aufnahmekörper 3a auf. Dieser besteht aus einem Halteschuh 4 sowie einem Stiftkörper 5a, welcher sich - bezogen auf die Einbaulage der Fahrzeugsitzaufnahme 1a - von dem Fahrzeugsitz weg erstreckt. Der Halteschuh 4 weist eine Öffnung auf, an die sich der Stiftkörper 5a derart anschließt, dass eine im Stiftkörper 5a angeordnete Gewindeöffnung 23 zur Aufnahme einer Befestigungsschraube zur Anordnung des Fahrzeugsitzes zugänglich ist. Die Befestigung des Fahrzeugsitzes erfolgt durch Einschrauben einer hier nicht dargestellten Befestigungsschraube in die Gewindeöffnung 23, wobei in der montierten Lage der Halteschuh 4 mit seiner Oberseite an einer Kontaktfläche am Fahrzeugsitz, vorzugsweise einer Bodenschiene 22 anliegt (vgl. Fig. 2 und 3).

Der Aufnahmekörper 3a ist an dem langgestreckten, ein Innenschienenprofil aufweisenden Grundkörper 2 in Längsachsenrichtung des Stiftkörpers 5a verschiebbar angeordnet, wobei in der in Fig. 1 dargestellten Normallage der Aufnahmekörper 3a über eine formschlüssige Verbindung zwischen einem verschiebbar an dem Grundkörper 2 gelagerten Schlittenkörper 9 und dem Halteschuh 4 lagegesichert ist. Der in Längsachsenrichtung des Grundkörpers 2 verschiebbare Schlittenkörper 9 weist dabei zur Arretierung des Aufnahmekörpers 3a quer zur Längsachsenrichtung des Grundkörpers 2 vorstehende Laschen 16 auf, welche in der Normallage des Halteschuhs 4 an Kontaktflächen 17 des Halteschuhs 4 anliegen. Über die Verbindung der Laschen 16 mit den Kontaktflächen 17 ist eine Verlagerung des Aufnahmekörpers 3a aus der in Fig. 1 dargestellten Normallage in Richtung einer hier nicht dargestellten Crashlage, in der der Halteschuh von dem Grundkörper abgehoben ist, blockiert. Zusätzliche von dem Halteschuh 4 vorstehende Stützkörper 19 liegen auf einer Stützfläche 18 einer auf dem Grundkörper 2 angeordneten Abdeckung 20 auf, so dass auch eine Verlagerung des Aufnahmekörpers 3a, bei der sich der Halteschuh 4 ausgehend von der Normallage in Richtung auf den Grundkörper 2 bewegen würde, verhindert ist.

Um eine Verlagerung des Aufnahmekörpers 3a aus der dargestellten Normallage in die nicht dargestellte Crashlage zu ermöglichen, ist es erforderlich, den Schlittenkörper 9 entgegen einer durch eine Druckfeder 15 hervorgerufene Vorspannung zu verlagern, wobei die Druckfeder 15 einenends an dem Schlittenkörper 9 und anderenends an einer Innenfläche des Grundkörpers 2 anliegt. Durch eine Verlagerung des Schlittenkörpers 9 in Richtung auf die Druckfeder 15 wird erreicht, dass die Laschen 16 mit den Kontaktflächen 17 des Halteschuhs 4 außer Eingriff gelangen, so dass dann eine Verlagerung des Aufnahmekörpers 3a in Richtung der Crashlage erfolgen kann, wobei der der Halteschuh 4 von dem Grundkörper 2 abgehoben ist.

Zur Verlagerung des Schlittenkörpers 9 innerhalb des ein Innenschienenprofil aufweisenden Grundkörpers 2 dient ein pyrotechnischer Aktuator 10, welcher auf der der Druckfeder 15 gegenüberliegenden Seite mit dem Grundkörper 2 verbunden ist. Hierzu dient eine Halteklammer 12, die über Nieten 13 an dem Grundkörper 2 fixiert ist und insbesondere eine axiale Verschiebung des pyrotechnischen Aktuators 10 innerhalb des Grundkörpers 2 verhindert.

Die Gasaustrittöffnung 11 des pyrotechnischen Aktuators 10 ist unmittelbar im Bereich der Seitenfläche des Schlittenkörpers 9 angeordnet, die der Seite gegenüberliegt, an welcher die Druckfeder 15 anliegt. Durch eine Aktivierung des pyrotechnischen Aktuators 10 bewirkt der Gasaustritt eine Verlagerung des Schlittenkörpers 9 in Richtung auf die Druckfeder 15, wodurch der Schlittenkörper 9 den Halteschuh 4 freigibt und eine Verlagerung des Aufnahmekörpers 3a ermöglicht.

Um im Rahmen der Bewegung des Aufnahmekörpers 3a einen Energieabbau zu erreichen, ist koaxial zum Stiftkörper 6a ein Dämpfungselement 8 angeordnet, welches einenends an einer Unterseite des Grundkörpers 2 und anderenends an einem Anschlagelement 6a angeordnet ist, welches durch Aufweiten des Endes des Stiftkörpers 5 erreicht wurde. Zur Befestigung der Fahrzeugaufnahme 1a am Fahrzeugboden 21 dient eine Befestigungsschraube 14, mittels derer die Fahrzeugsitzaufnahme 1a am Fahrzeugboden 21 verschraubbar ist.

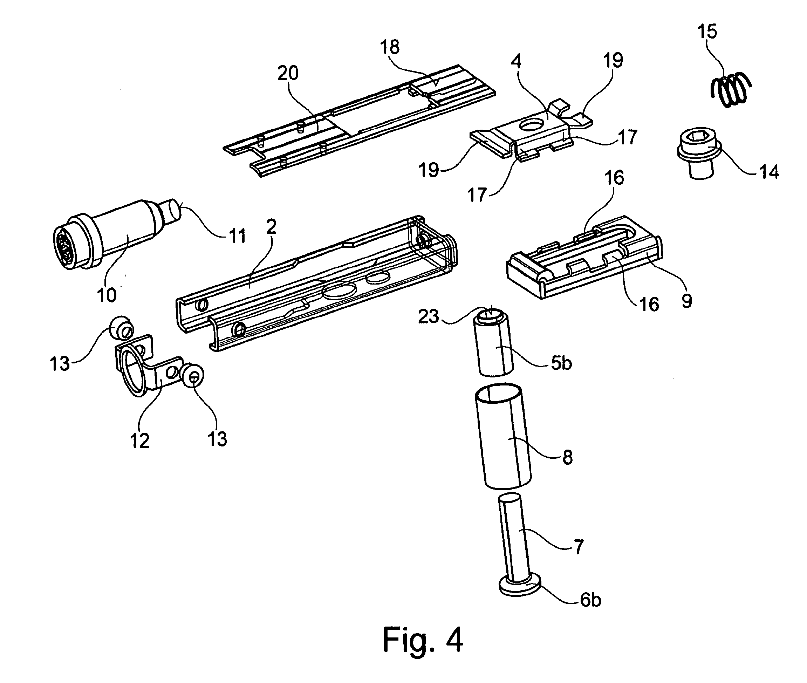

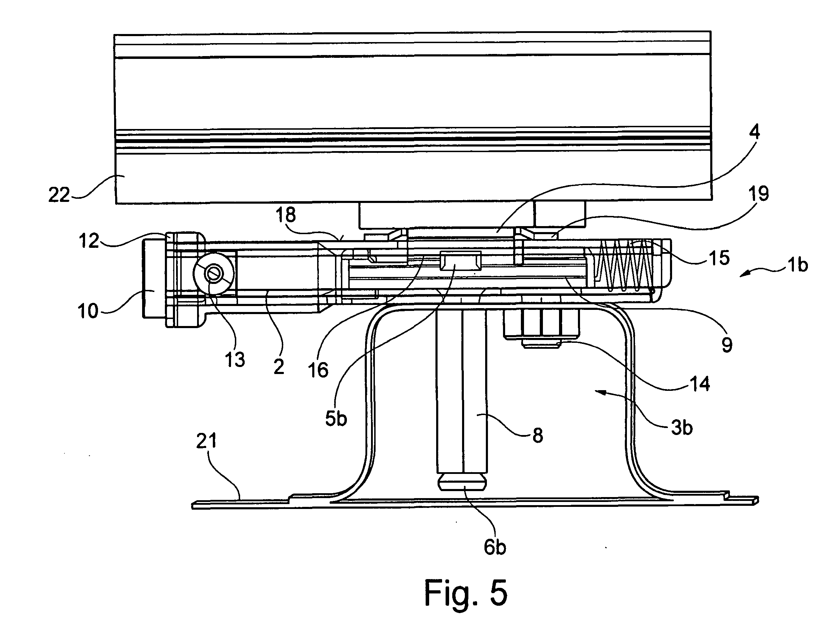

Ein weiteres Ausführungsbeispiel einer Fahrzeugsitzaufnahme ist in den Fig. 4 und 5 dargestellt. Der Unterschied der Fahrzeugsitzaufnahme 1b zu der in den Fig. 1 - 3 dargestellten Fahrzeugsitzaufnahme 1a besteht darin, dass der Aufnahmekörper 3b anstelle eines Stiftkörpers 5a, welcher mit dem Halteschuh 4 verbunden ist, eine mit dem Halteschuh 4 verbundene Gewindehülse 5b aufweist, welche einenends zur Aufnahme einer Befestigungsschraube zur Anordnung des Fahrzeugsitzes und anderenends zur Anordnung einer Schraube 7 ausgebildet ist, wobei der Schraubenkopf 6b der Schraube 7 als Anschlagelement für das koaxial zur Gewindehülse 5b und Schraube 7 angeordnete Dämpfungselement 8 dient. Im Übrigen weist die Fahrzeugsitzaufnahme 1b denselben Aufbau auf wie die in Fig. 1 dargestellte Fahrzeugsitzaufnahme 1a. Die Verwendung der Fahrzeugsitzaufnahme 1b zur Anordnung eines Fahrzeugsitzes ist exemplarisch in Fig. 5 dargestellt. In der Einbaulage des Fahrzeugsitzes liegt eine Bodenschiene 22 auf dem Halteschuh 4 auf, wobei die Fahrzeugsitzaufnahme 1b über die Befestigungsschraube 14 mit dem Fahrzeugboden 21 verschraubt ist.

## Patentansprüche

1. Fahrzeugsitzaufnahme, mit
- einem mit einem Fahrzeugboden verbindbaren Grundkörper und
- einem mit einem Fahrzeugsitz, insbesondere einem Schienenpaar eines Fahrzeugsitzes, bevorzugt einer Bodenschiene eines Fahrzeugsitzes verbindbaren Aufnahmekörper,
wobei der Aufnahmekörper derart mit dem Grundkörper verbunden ist, dass der Aufnahmekörper im Crashfall relativ gegenüber dem Grundkörper aus einer Normallage in Richtung auf eine Crashlage verlagerbar ist,
**dadurch gekennzeichnet, dass**
der Aufnahmekörper (3a, 3b) im Normalbetrieb durch ein verlagerbares und in der Normallage des Aufnahmekörpers (3a, 3b) mit diesem und dem Grundkörper (2) in Eingriff befindliches Sperrelement (9) lagestabil am Grundkörper (2) angeordnet ist, wobei das Sperrelement (9) im Crashfall mittels einer elektromagnetisch und/oder pyrotechnisch wirkenden Betätigungseinheit (10) mit dem Grundkörper (2) und/oder dem Aufnahmekörper (3a, 3b) außer Eingriff bringbar ist.

2. Fahrzeugsitzaufnahme nach Anspruch 1, **dadurch gekennzeichnet, dass** der Aufnahmekörper (3a, 3b) in der Normallage formschlüssig mit dem Sperrelement (9) verbunden ist.

3. Fahrzeugsitzaufnahme nach Anspruch 1 oder 2, **dadurch gekennzeichnet, dass** im Bewegungsbereich des Aufnahmekörpers (3a, 3b) aus der Normallage in Richtung auf die Crashlage ein elastisch und/oder plastisch verformbares Absorptionselement (8) angeordnet ist.

4. Fahrzeugsitzaufnahme nach einem der vorhergehenden Ansprüche, **dadurch gekennzeichnet, dass** das Sperrelement durch einen Schlittenkörper (9) gebildet ist, der längsverschieblich zuwischen einer Sperrlage und einer Freigabelage an einem ein Schienenprofil aufweisenden Grundkörper (2) gelagert ist.

5. Fahrzeugsitzaufnahme nach einem der vorhergehenden Ansprüche, **dadurch gekennzeichnet, dass** das Sperrelement (9) mindestens eine im Wesentlichen quer zur Verstellrichtung des Aufnahmekörpers (3a, 3b) aus der Normallage in die Crashlage verlaufende Lasche (16) aufweist, die in der Sperrlage an einer Kontaktfläche (17) des Aufnahmekörpers (3a, 3b) anliegt.

6. Fahrzeugsitzaufnahme nach einem der vorhergehenden Ansprüche, **dadurch gekennzeichnet, dass** der Aufnahmekörper (3a, 3b) ein in der Normallage zumindest abschnittsweise innerhalb des Schienenprofils angeordneten Halteschuh (4) aufweist, der mindestens eine Kontaktfläche (17) zur formschlüssigen Verbindung mit dem Sperrelement (9) sowie einen Stützkörper (19) aufweist, der in der Normallage an einer dem Fahrzeugsitz zugewandten Stützfläche (18) des Grundkörpers (2) anliegt.

7. Fahrzeugsitzaufnahme nach einem der vorhergehenden Ansprüche, **dadurch gekennzeichnet, dass** der Halteschuh (4) mit einem sich in Verstellrichtung des Aufnahmekörpers (3a, 3b) erstreckenden Stiftkörper (5a, 5b) verbunden ist, wobei der Stiftkörper (5) ein koaxial zu diesem angeordnetes Dämpfungselement (8) aufweist, das einenends an dem Grundkörper (2) und anderenends an einem Anschlagelement (6a, 6b) anliegt, das im Bereich des dem Halteschuh (4) gegenüberliegenden Endes des Stiftkörpers (5a, 5b) radial von diesem vorsteht.

8. Fahrzeugsitzaufnahme nach einem der vorhergehenden Ansprüche, **dadurch gekennzeichnet, dass** der Stiftkörper durch eine Gewindehülse (5b) gebildet ist, die einenends zur Befestigung mit dem Fahrzeugsitz und/oder anderenends zur Anordnung einer in die Gewindehülse (5b) einschraubbaren Schraube (7) ausgebildet ist.

9. Fahrzeugsitzaufnahme nach einem der vorhergehenden Ansprüche, **dadurch gekennzeichnet, dass** der Schlittenkörper (9) in Richtung auf seine Sperrlage vorgespannt ist, insbesondere durch ein einenends an dem Schlittenkörper (9) und anderenends an dem Grundkörper (2) anliegendes Federelement (15).

10. Fahrzeugsitzaufnahme nach einem der vorhergehenden Ansprüche, **dadurch gekennzeichnet, dass** der pyrotechnische Aktuator (10) derart an dem Grundkörper (2) angeordnet ist, vorzugsweise mit dessen Längsachse parallel zur Längsachse des Schieneprofils, dass dessen Aktivierung eine Verlagerung des Schlittenkörpers (9) aus der Sperrlage in Richtung auf die Freigabelage bewirkt.

11. Fahrzeugsitzaufnahme nach einem der vorhergehenden Ansprüche, **dadurch gekennzeichnet, dass** der pyrotechnische Aktuator (10) mit seiner Gasaustrittsöffnung (11) im Bereich der Seitenfläche des Schlittenkörpers (9) angeordnet ist, die dem Federelement (15) gegenüberliegend verläuft.

## Claims

1. A vehicle seat holder with
- a base body connectable with a vehicle floor and
- a holder body connectable with a vehicle seat, in particular a rail pair of a vehicle seat, preferably a floor rail of a vehicle seat,
wherein the holder body is connected with the base body such that the holder body is displaceable in the event of crash relative to the base body from a normal position towards a crash position,
**characterized in that**
the holder body (3a, 3b) in normal operation is arranged in a positionally stable manner on the base body (2) through a displaceable locking element (9) engaging in the normal position of the holder body (3a, 3b) with it and the base body (2), wherein the locking element (9) is disengagable in the event of a crash from the base body (2) and/or the holder body (3a, 3b) by means of an electromagnetically and/or pyrotechnically acting actuating unit (10).

2. The vehicle seat holder according to claim 1, **characterized in that** the holder body (3a, 3b) is connected in the normal position in a form-fitting manner with the locking element (9).

3. The vehicle seat holder according to claim 1 or 2, **characterized in that** an elastically and/or plastically deformable absorption element (8) is arranged in the movement area of the holder body (3a, 3b) from the normal position towards the crash position.

4. The vehicle seat holder according to one of the preceding claims, **characterized in that** the locking element is formed by a carriage body (9), which is mounted in a longitudinally displaceable manner between a locked position and a released position on a base body (2) having a rail profile.

5. The vehicle seat holder according to one of the preceding claims, **characterized in that** the locking element (9) has at least one strap (16) progressing mainly diagonally to the adjustment direction of the holder body (3a, 3b) from the normal position into the crash position, which rests against the contact surface (17) of the holder body (3a, 3b) in the locked position.

6. The vehicle seat holder according to one of the preceding claims, **characterized in that** the holder body (3a, 3b) has a holding shoe (4) arranged in the normal position at least in sections within the rail profile, which has at least one contact surface (17) for a form-fitting connection with the locking element (9) as well as a supporting body (19), which rests in the normal position against a supporting surface (18) of the base body (2) facing the vehicle seat.

7. The vehicle seat holder according to one of the preceding claims, **characterized in that** the holding shoe (4) is connected with a pin body (5a, 5b) extending in the adjustment direction of the holder body (3a, 3b), wherein the pin body (5) has a dampening element (8) arranged coaxially to it, which rests on one end against the base body (2) and on the other end against a stop element (6a, 6b), which protrudes radially from it in the area of the end of the pin body (5a, 5b) lying opposite the holding shoe (4).

8. The vehicle seat holder according to one of the preceding claims, **characterized in that** the pin body is formed by a threaded sleeve (5b), which is designed on one end for the fastening with the vehicle seat and/or on the other end for the arrangement of a screw (7) screwable into the threaded sleeve (5b).

9. The vehicle seat holder according to one of the preceding claims, **characterized in that** the carriage body (9) is pretensioned in the direction of its locked position, in particular through a spring element (15) resting on one end against the carriage body (9) and on the other end against the base body (2).

10. The vehicle seat holder according to one of the preceding claims, **characterized in that** the pyrotechnical actuator (10) is arranged on the base body (2), preferably with its longitudinal axis parallel to the longitudinal axis of the rail profile, such that its activation causes a displacement of the carriage body (9) from the locked position towards the released position.

11. The vehicle seat holder according to one of the preceding claims, **characterized in that** the pyrotechnical actuator (10) with its gas outlet opening (11) is arranged in the area of the lateral surface of the carriage body (9), which progresses opposite the spring element (15).

## Revendications

1. Réception de siège de véhicule comprenant
- un corps de base pouvant être connecté à un plancher de véhicule et
- un corps de réception pouvant être connecté à un siège de véhicule, notamment une paire de rails d'un siège de véhicule, de préférence un rail de plancher d'un siège de véhicule,
dans laquelle le corps de réception est connecté au corps de base de telle sorte que le corps de réception puisse être déplacé relativement par rapport au corps de base en cas de collision d'une position normale en direction d'une position de collision,
**caractérisée en ce que**
le corps de réception (3a, 3b) est disposé de manière stable en position sur le corps de base (2) en fonctionnement normal par un élément de blocage (9) pouvant être déplacé et se trouvant en engagement avec le corps de réception (3a, 3b) et le corps de base (2) dans la position normale du corps de réception (3a, 3b), dans laquelle l'élément de blocage (9) peut être amené hors d'engagement avec le corps de base (2) et/ou le corps de réception (3a, 3b) en cas de collision au moyen d'un module d'actionnement (10) agissant de manière électromagnétique et/ou pyrotechnique.

2. Réception de siège de véhicule selon la revendication 1, **caractérisée en ce que** le corps de réception (3a, 3b) est connecté par conjugaison de formes à l'élément de blocage (9) dans la position normale.

3. Réception de siège de véhicule selon la revendication 1 ou 2, **caractérisée en ce qu'**un élément d'absorption (8) déformable de manière élastique et/ou plastique est disposé dans la région de déplacement du corps de réception (3a, 3b) de la position normale en direction de la position de collision.

4. Réception de siège de véhicule selon l'une quelconque des revendications précédentes, **caractérisée en ce que** l'élément de blocage est formé par un corps de coulisseau (9) qui est logé de manière coulissante longitudinalement entre une position de blocage et une position de libération sur un corps de base (2) présentant un profil de rail.

5. Réception de siège de véhicule selon l'une quelconque des revendications précédentes, **caractérisée en ce que** l'élément de blocage (9) présente au moins une languette (16) s'étendant essentiellement transversalement à la direction de déplacement du corps de réception (3a, 3b) de la position normale dans la position de collision qui repose dans la position de blocage sur une face de contact (17) du corps de réception (3a, 3b).

6. Réception de siège de véhicule selon l'une quelconque des revendications précédentes, **caractérisée en ce que** le corps de réception (3a, 3b) présente un patin de maintien (4) disposé au moins par section au sein du profil de rail dans la position normale qui présente au moins une face de contact (17) pour la connexion par conjugaison de formes à l'élément de blocage (9), ainsi qu'un corps d'appui (19) qui repose dans la position normale sur une face d'appui (18) du corps de base (2) tournée vers le siège de véhicule.

7. Réception de siège de véhicule selon l'une quelconque des revendications précédentes, **caractérisée en ce que** le patin de maintien (4) est connecté à un corps de tige (5a, 5b) s'étendant dans la direction de déplacement du corps de réception (3a, 3b), dans laquelle le corps de tige (5) présente un élément d'amortissement (8) disposé de manière coaxiale à lui qui repose à une extrémité sur le corps de base (2) et à l'autre extrémité sur un élément de butée (6a, 6b) qui dépasse radialement du corps de tige (5a, 5b) dans la région de l'extrémité de celui-ci opposée au patin de maintien (4).

8. Réception de siège de véhicule selon l'une quelconque des revendications précédentes, **caractérisée en ce que** le corps de tige est formé par un manchon fileté (5b) qui est réalisé à une extrémité pour la fixation au siège de véhicule et/ou à l'autre extrémité pour la disposition d'une vis (7) pouvant être vissée dans le manchon fileté (5b).

9. Réception de siège de véhicule selon l'une quelconque des revendications précédentes, **caractérisée en ce que** le corps de coulisseau (9) est précontraint en direction de sa position de blocage, notamment par un élément de ressort (15) reposant à une extrémité sur le corps de coulisseau (9) et à l'autre extrémité sur le corps de base (2).

10. Réception de siège de véhicule selon l'une quelconque des revendications précédentes, **caractérisée en ce que** l'actionneur pyrotechnique (10) est disposé sur le corps de base (2), de préférence avec son axe longitudinal parallèle à l'axe longitudinal du profil de rail, de telle sorte que son activation entraîne un déplacement du corps de coulisseau (9) de la position de blocage en direction de la position de libération.

11. Réception de siège de véhicule selon l'une quelconque des revendications précédentes, **caractérisée en ce que** l'actionneur pyrotechnique (10) est disposé avec son ouverture de sortie de gaz (11) dans la région de la face latérale du corps de coulisseau (9) qui s'étend à l'opposé de l'élément de ressort (15).
